# DEMANDE DE BREVET EUROPEEN

(11) **EP 0 931 948 A1**
(43) Date de publication de la demande: **28.07.1999**
(21) Numéro de dépôt: 99420021.0
(22) Date de dépôt: 25.01.1999
(51) Int. Cl.: F16C 11/04, G02C 5/22

(54) **Charnière pour application en micromécanique**

(30) Priorité: 26.01.1998 FR 9801019
(71) Demandeur: CHEVASSUS S.A., F-39400 Morez (FR)
(72) Inventeur: Hotellier, Christophe, 39400 Morez (FR)
(74) Mandataire: Moinas, Michel

(57) **Abrégé**

La charnière pour application en micromécanique comprend d'une part un charnon femelle (20) composé de deux oeilletons (24,26) taraudés parallèles tenus écartés et coaxialement par un corps (22) de chamon femelle, et d'autre part un chamon mâle (10) composé d'une pièce terminée par un oeilleton inséré entre les deux oeilletons du chamon femelle, ainsi qu'une vis (30) d'assemblage du charnon mâle dans le charnon femelle. La vis présente une tête (32) suivie d'un premier filetage arrière (35) suivi d'une partie cylindrique lisse (36) suivie d'un second filetage d'extrémité avant (39) de diamètres respectivement décroissants, chaque filetage (35,39) étant associé à l'un des taraudages (25,27) du charnon femelle. La longueur du premier filetage (25) est inférieure à l'épaisseur (e) du premier oeilleton (24) correspondant. La distance (d) entre la face inférieure d'appui (33) de la tête (32) et l'épaulement (37) séparant la partie cylindrique lisse (36) du second filetage avant (39) est sensiblement égale à la distance entre la face externe du premier oeilleton (24) et la face interne du second oeilleton (26).

## Description

La présente invention est relative à une charnière pour application en micromécanique telle que pour la bijouterie, pour l'horlogerie ou pour la lunetterie, et elle est plus particulièrement relative à une charnière, notamment à effet élastique, pour monture de lunettes utilisée pour relier une branche latérale au côté d'une façade.

Une charnière pour monture de lunettes comprend usuellement d'une part un charnon femelle composé de deux oeilletons parallèles tenus écartés et coaxialement par un corps de charnon femelle, et d'autre part un charnon mâle composé d'une pièce terminée par un oeilleton unique inséré entre les deux oeilletons du charnon femelle, ces chamons mâle et femelle étant assemblés par une vis. Dans le domaine d'application envisagé, la tige cylindrique de la vis présente alors normalement un diamètre inférieur à 2 mm.

Le charnon femelle est normalement solidaire ou intégré dans un tenon latéral de la façade frontale de support des verres de la monture de lunettes, alors que le chamon mâle est ménagé à l'extrémité d'une branche latérale de monture de lunettes. L'agencement inverse, dans lequel le charnon mâle est une partie intégrante du tenon de façade, est également envisageable.

Usuellement, la vis comprend une tête prolongée par une tige cylindrique présentant une partie intermédiaire lisse et une partie d'extrémité filetée. Lorsque la vis est installée dans la chamière, la partie intermédiaire lisse traverse le premier oeilleton du charnon femelle et le charnon mâle, et l'extrémité filetée est engagée dans un taraudage du second oeilleton du charnon femelle, la tête venant alors en appui contre la face externe du premier oeilleton de charnon femelle.

La vis de chamière doit pouvoir remplir plusieurs contraintes. Elle doit d'abord maintenir le charnon mâle centré par rapport au charnon femelle dans les plages de contraintes en traction et en flexion envisagées sur la charnière. Elle doit surtout ne pas se dévisser avec le temps au risque de se sortir entièrement de la charnière en provoquant un désassemblage indésiré, et ceci malgré les couples de forces exercés sur elle par le charnon mâle pivotant. Son maintien exactement en place doit notamment permettre un réglage à une valeur constante dans le temps du couple de friction apparaissant entre les charnons lors des pivotements. Ceci est particulièrement utile pour des charnières élastiques bistables dans lesquelles le couple de friction doit pouvoir être maintenu en permanence à une valeur faible afin que le mécanisme élastique puisse aisément appliquer un effet de claquement lors du déplacement d'une branche de monture de lunettes entre sa position de rangement et une position d'utilisation.

Afin de maintenir cette vis en place, il a été proposé, par exemple dans les documents DE 12 24 058, DE 22 36 806 ou FR 2 404 241, d'insérer une douille en matériau synthétique entre la vis et l'un et/ou l'autre chamon. En augmentant ainsi les coefficients de frottement au niveau des surfaces de contact vis/charnière, cette douille devrait permettre d'établir et de maintenir un couple de serrage de vis prédéterminé. Toutefois, il peut arriver que les caractéristiques du matériau synthétique de la douille évoluent avec le temps, ou que cette douille soit endommagée par la chaleur dégagée lors du soudage de la charnière sur une monture de lunettes métallique. De plus, cette vis ne peut être montée qu'après réalisation des traitements de surfaces effectués en température.

Dans le document EP 384 289 est divulguée une chamière pour monture de lunettes dans laquelle les deux oeilletons de la charnière femelle présentent un taraudage de diamètres différents. A cette chamière est associé un axe d'assemblage comprenant une partie intermédiaire lisse séparant deux extrémités filetées de diamètre en correspondance avec celui de chacun des oeilletons de la charnière femelle. Afin de pouvoir installer cet axe, il est prévu que les parties filetées et les taraudages aient un même pas appartenant à une même hélice. La longueur du filetage de plus grand diamètre est supérieure à l'épaisseur de son oeilleton correspondant de telle sorte que son épaulement de raccordement à la partie lisse vient, lors du vissage, le premier en appui dans une cavité de centrage ménagée dans la face en correspondance du charnon mâle. Ainsi, lors de son serrage, cet axe vient plaquer le charnon mâle contre l'autre oeilleton, le premier s'écartant pour exercer une force d'appui élastique.

Dans cette charnière, la zone de filetage où apparaissent les forces interactives de friction assurant la rétention de l'axe est donc doublée, ce qui augmente sensiblement le maintien de cet axe en place. Toutefois, l'utilisateur peut serrer excessivement cet axe dans la charnière, en augmentant alors la force de friction entre les charnons à une valeur mal maîtrisée, voire en bloquant ainsi le fonctionnement d'une charnière élastique.

Il est connu du document FR 2 509 813 un tourillon de montage présentant également deux extrémités filetées de même pas appartenant à une même hélice, lesquelles extrémités sont séparées par une partie intermédiaire lisse, et qui est prévu pour assembler, au sein de machines-outils, des tiges d'articulation et de transmission de couples de forces. Les longueurs des parties filetées et de la partie lisse sont établies de telle sorte que, lors du vissage, c'est l'épaulement séparant la partie lisse de la partie filetée frontale qui vient d'abord en appui contre la face interne de l'oeilleton en correspondance. Le serrage de maintien de cet axe s'effectue donc au niveau de ce premier épaulement frontal faisant que l'écartement entre les deux oeilletons taraudés est imposé à sa valeur initiale par l'hélice commune des parties filetées. On obtient alors un assemblage solide dans lequel le tourillon ne peut se défaire et dans lequel la friction de fonctionnement des tiges de machines-outils est préétablie à une valeur dépendante essentiellement de l'écartement des oeilletons.

Toutefois, la réalisation d'un tel tourillon à échelle réduite pour utilisation en micromécanique, notamment dans une charnière de monture de lunettes, ne donne nullement les résultats escomptés. En effet, compte-tenu de la faible différence de diamètres possible entre les filetages avant et arrière, l'épaulement frontal a tendance à pénétrer dans les filets du premier taraudage avant de plus petit diamètre avec dégradation de ses filets, les filets du filetage arrière de plus grand diamètre pouvant alors atteindre la face en correspondance du chamon mâle et le bloquer. En outre, on a constaté qu'une charnière de lunettes équipée d'un tel mini-tourillon ne tient pas à un test dit de "rhabillage" consistant à appliquer un couple de forces entre la façade et la branche de monture de lunettes. On constate en effet que les filetages tiennent insuffisamment dans les taraudages, faisant que le charnon mâle arrive à écarter les oeilletons du charnon femelle.

Le but de la présente invention est une charnière pour application en micromécanique telle que pour la bijouterie, pour l'horlogerie ou pour la lunetterie, comprenant d'une part un charnon femelle composé de deux oeilletons taraudés parallèles tenus écartés et coaxialement par un corps de charnon femelle, et d'autre part un charnon mâle composé d'une pièce terminée par un oeilleton inséré entre les deux oeilletons du charnon femelle, ainsi qu'une vis d'assemblage du charnon mâle dans le chamon femelle, cette chamière devant pratiquement être indémontable involontairement, et au sein de laquelle doit pouvoir être établie une force de friction de fonctionnement à une valeur prédéterminée, voire nulle dans le cas de charnière élastique, cette charnière maintenant cette valeur de friction de fonctionnement de manière permanente.

Ces buts sont atteints du fait que la vis présente une tête suivie d'un premier filetage arrière suivi d'une partie cylindrique lisse suivie d'un second filetage d'extrémité avant de diamètres respectivement décroissants, chaque filetage étant associé à l'un des taraudages du charnon femelle, du fait que la longueur du premier filetage est inférieure à l'épaisseur du premier oeilleton correspondant, et du fait que la distance entre la face inférieure d'appui de la tête et l'épaulement séparant la partie cylindrique lisse du second filetage avant est sensiblement égale à la distance entre la face externe du premier oeilleton et la face interne du second oeilleton.

En d'autres termes, la distance entre la face inférieure d'appui de la tête et l'épaulement séparant la partie lisse du second filetage avant doit être sensiblement égale à la somme de l'épaisseur du premier oeilleton, de l'épaisseur du charnon mâle et de l'éventuel jeu de fonctionnement désiré.

La vis de charnière selon l'invention se distingue de l'axe selon le document EP 384 289 en ce que c'est l'épaulement avant séparant la partie cylindrique lisse du second filetage avant qui vient le premier en appui avec la face correspondante d'oeilleton femelle lors du vissage, et non plus l'épaulement arrière séparant le premier filetage arrière de la partie cylindrique lisse en appui directement avec le charnon mâle. Ce charnon mâle ne peut donc plus être bloqué involontairement dans le chamon femelle.

La vis de charnière selon l'invention se distingue de l'axe selon le document FR 2 509 813 en ce qu'elle s'applique en micromécanique, c'est-à-dire que son diamètre de partie intermédiaire lisse est normalement inférieur à 2 mm; et en ce qu'elle est alors complétée d'une tête de vis qui, non seulement permet de mieux la manipuler et la visser à l'aide d'un outil, mais qui surtout vient réaliser une seconde surface d'appui permettant de serrer le premier filetage adjacent arrière dans son taraudage en complément à la première surface d'appui réalisée par l'épaulement avant permettant de serrer le second filetage adjacent dans son taraudage, ces serrages au niveau de filets assurant le maintien en place de la vis. En outre, l'écartement de ces deux surfaces d'appui, intangible par la construction de la vis, fixe à une valeur exacte l'écartement des oeilletons du charnon femelle, ce qui empêche de coincer le charnon mâle.

La vis de la chamière selon l'invention présente donc deux faces d'appui qui chacune empêche une avancée néfaste du filetage adjacent soit dans le chamon mâle au risque de blocage de fonctionnement, soit dans le taraudage avant au risque de destruction susceptible d'entraîner un démontage involontaire ultérieur. Ces faces d'appui assurent donc chacune le coincement effectif du filetage adjacent dans son taraudage correspondant de charnon femelle, ce qui confirme le maintien fiable de cette vis dans la chamière.

La vis selon l'invention apporte une économie lors de l'assemblage de la monture de lunettes du fait qu'elle peut être installée sans précaution particulière, alors que traditionnellement, la vis est bloquée lors de l'assemblage, puis desserrée, pour obtenir la friction nécessaire. Ce desserrage de réglage contribue au desserrage indésiré des vis actuelles.

En outre, lors d'un test de rhabillage, la tête contribue au maintien du premier oeilleton contre le charnon mâle assuré en partie par le premier filetage, ce qui améliore sensiblement la tenue de la charnière selon l'invention à ce test.

Utilement, pour une vis de diamètre de tige inférieur à 2 mm, le rapport de diamètre entre la partie cylindrique lisse et son premier filetage arrière est de l'ordre de 0,75, et entre la partie cylindrique lisse et son second filetage avant est compris entre 1,25 et 1,50.

Ainsi, pour une vis de partie médiane cylindrique de diamètre égal à 1,4 mm, le filetage arrière est choisi à M1.80 et le filetage avant est choisi à M1.1 ; alors que pour une vis de partie médiane cylindrique de diamètre égal à 1,2 mm, le filetage arrière est choisi à M1,6 et le filetage avant est choisi à M0,8.

Utilement, le rapport de diamètre entre la tête de vis et sa partie cylindrique est compris entre 1,2 et 2, de préférence de l'ordre de 1,6. Ceci correspond à une tête de diamètre de 2,2 mm pour une partie cylindrique de 1,4 mm, ou de 2 mm pour une partie cylindrique de 1,2 mm.

De préférence, la distance entre la face inférieure d'appui de la tête et l'épaulement séparant la partie cylindrique lisse du second filetage avant est usinée avec une tolérance inférieure à 0,05, voire 0,03 mm.

Utilement, une gorge est ménagée entre la tête de vis et le premier filetage et/ou entre l'épaulement avant et le second filetage, laissant ainsi libres les surfaces d'appui correspondantes, notamment lors de la formation des filetages par leurs filières correspondantes.

Utilement, la vis est réalisée en métal dur tel qu'un acier inox, et est installée dans une charnière réalisée en un métal plus tendre, tel qu'un maillechort.

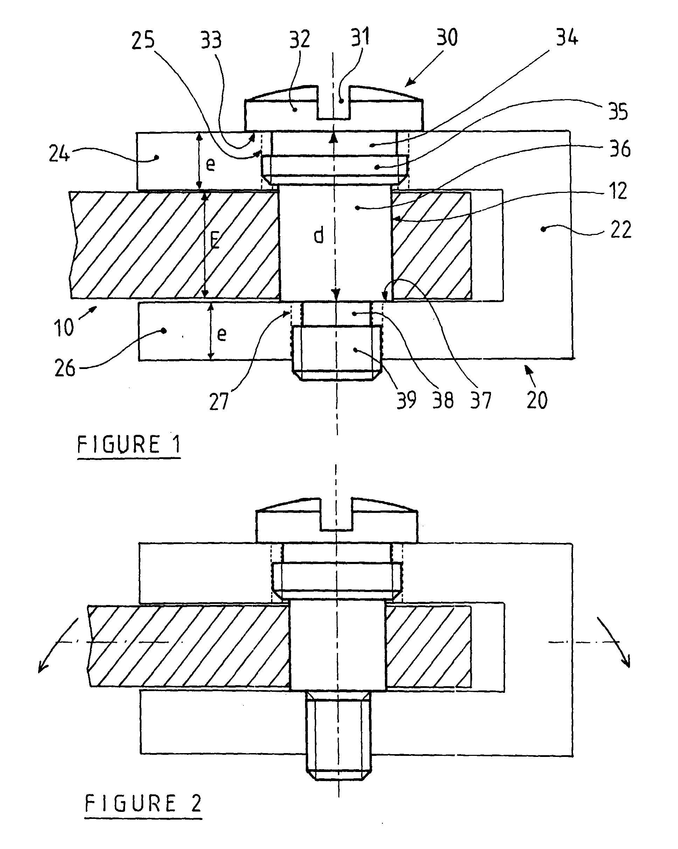

L'invention sera mieux comprise à l'étude de deux exemples de réalisation pris à titre nullement limitatif et illustrés respectivement en coupe dans les figures 1 et 2 annexées.

Sur la figure 1 est illustrée schématiquement en coupe une charnière composée d'un charnon mâle 10 inséré dans un chamon femelle 20 où il est retenu par une vis 30. Le charnon femelle 20 comprend deux oeilletons 24, 26 parallèles en vis-à-vis tenus avec un écartement prédéterminé par un corps 22 de charnon femelle. L'épaisseur E du charnon mâle 10 correspond, au jeu de mobilité près, à l'écartement entre les deux oeilletons 24, 26.

Dans le cadre de l'invention, les deux oeilletons présentent un taraudage coaxial, respectivement un taraudage 25 de plus grand diamètre dans le premier oeilleton 24 et un taraudage 27 dans le second oeilleton 26. Les taraudages 24 et 25 ont un pas identique et appartiennent à une même hélice. Le charnon mâle 10 est prévu pour être installé au sein du charnon femelle de telle sorte que son alésage 12 soit également coaxial aux deux taraudages 25, 27.

Selon l'invention, la vis 30 comprend une tête 32 avec une rainure 31 suivie d'un premier filetage 35 de diamètre correspondant à celui du taraudage 25, suivi d'une partie cylindrique lisse 36 suivie d'un second filetage d'extrémité avant 39 de diamètre correspondant à celui du second taraudage 27 du second oeilleton 26. Les deux filetages ont donc un même pas sur une même hélice. Toutefois, on peut envisager que l'hélice du premier filetage et taraudage soit décalée par rapport à l'hélice du second filetage et taraudage.

Selon l'invention, d'une part la longueur du second filetage 35 est inférieure à l'épaisseur (e) du premier oeilleton 24 ; et d'autre part, la longueur (d) séparant la face inférieure 33 de la tête 32 et l'épaulement 37 délimitant la partie cylindrique lisse 36 et le second filetage d'extrémité avant 39 est égale, au jeu près, à la somme des épaisseurs (e) du premier oeilleton 24 et (E) du chamon mâle 10.

Comme on peut le constater, les diamètres respectivement de la tête 32, du filetage 35, de la partie cylindrique lisse 36 et du filetage d'extrémité 39 sont respectivement décroissants. Notamment, dans un exemple de réalisation pratique, le diamètre de la tête 32 est de 2,2 mm, le filetage 35 est du type M1.80 x 0,2, le diamètre de la partie intermédiaire lisse 36 est de 1,40 mm et le second filetage 39 est du type M1.10 x 0,2 (c'est-à-dire un diamètre externe de 1,10 mm pour un pas de 0,2 mm). La longueur d est alors égale à 2,20 mm, la longueur de la partie cylindrique lisse 36 est de 1,5 mm alors que la longueur du second filetage 39 est de 1 mm.

De préférence, une première gorge 34 est ménagée entre le premier filetage 35 et la face inférieure 33 de la tête 32 de telle sorte que cette face inférieure 33 ne soit pas altérée lors de l'usinage du premier filetage 35. De manière similaire, une gorge 38 est ménagée entre le second filetage d'extrémité avant 39 et la face inférieure frontale 37 de la partie cylindrique lisse 36 de la vis.

La vis décrite précédemment est installée de la manière suivante. Après avoir positionné le charnon mâle de telle sorte que son alésage 12 soit coaxial aux taraudages 25 et 27, la vis 30 peut être aisément prise manuellement par sa tête 32 et introduite par son premier filetage avant 39 au travers du taraudage 25, puis de l'alésage 12 jusqu'à l'entrée du second taraudage 27.

On peut alors insérer un tournevis dans la rainure 31 de la tête 32 pour commencer le vissage du filetage 39 dans le taraudage 27 du second oeilleton 26. Après environ un demi-tour, le premier filetage 35 vient s'engager dans le premier taraudage 25 du premier oeilleton 24, maintenant alors rigidement l'écartement E entre les deux oeilletons 24, 26. Après plusieurs tours de vis, l'épaulement frontal 37 arrive en butée contre la face interne du second oeilleton 26 et, pratiquement simultanément, la face inférieure 33 de la tête 32 vient également en butée contre la face externe du premier oeilleton 24.

De par la présence de chacune des surfaces d'appui 33, 37, les filets du filetage adjacent, respectivement 35, 39, sont alors contraints à l'intérieur de leurs taraudages respectifs 25, 27, générant à ce niveau des forces de coincement dépendant des angles de filets et des coefficients de friction entre le matériau de la vis et celui du charnon femelle 20. On obtient donc un double coincement au niveau de chacun des filetages 35, 39, assurant un maintien fiable de la vis au sein de la charnière à l'encontre des couples de rotation susceptibles d'être induits par l'alésage 12 sur la partie lisse 36 au cours de l'usage de cette chamière.

Surtout, l'écartement E entre les oeilletons 24, 26 est maintenant imposé par la construction de la vis 30, notamment par la distance d séparant respectivement la face externe de l'oeilleton 24 et la face interne de l'oeilleton 26. Ainsi, quand bien même on chercherait à serrer encore plus la vis 30, cet écartement E est maintenu à une valeur rigoureusement constante.

La figure 2 illustre un mode de réalisation plus petit dans lequel la tête de vis présente un diamètre de 2 mm, le premier filetage est du type M1.6 x 0,2, la partie cylindrique intermédiaire lisse présente un diamètre de 1,2 mm et le filetage inférieur frontal est du type M0.80 x 0,2. Compte-tenu de la faible dimension de ce dernier filetage, il n'est alors pas pratiqué de rainures intermédiaires.

Si on applique à cette chamière un test de résistance au couple dit de "rhabillage" tel qu'illustré, on constate que le chamon mâle a tendance à écarter les oeilletons l'un de l'autre, mais que ceux-ci sont retenus par non pas seulement la présence du premier filetage supérieur, mais également par la face d'appui de la tête. La tenue de cette charnière est donc sensiblement augmentée.

De nombreuses améliorations peuvent être apportées à cette vis dans le cadre de l'invention, notamment par un choix adéquat de matériaux composant chacun des charnons et la vis et/ou en augmentant les épaisseurs d'oeilletons de charnon femelle et/ou en augmentant certains diamètres, notamment de la tête.

## Revendications

1. Charnière pour application en micromécanique comprenant d'une part un charnon femelle (20) composé de deux oeilletons (24,26) taraudés parallèles tenus écartés et coaxialement par un corps (22) de charnon femelle, et d'autre part un charnon mâle (10) composé d'une pièce terminée par un oeilleton inséré entre les deux oeilletons du charnon femelle, ainsi qu'une vis (30) d'assemblage du charnon mâle dans le charnon femelle, caractérisée en ce que la vis présente une tête (32) suivie d'un premier filetage arrière (35) suivi d'une partie cylindrique lisse (36) suivie d'un second filetage d'extrémité avant (39) de diamètres respectivement décroissants, chaque filetage (35,39) étant associé à l'un des taraudages (25,27) du charnon femelle, en ce que la longueur du premier filetage (25) est inférieure à l'épaisseur (e) du premier oeilleton (24) correspondant, et en ce que la distance (d) entre la face inférieure d'appui (33) de la tête (32) et l'épaulement (37) séparant la partie cylindrique lisse (36) du second filetage avant (39) est sensiblement égale à la distance entre la face externe du premier oeilleton (24) et la face interne du second oeilleton (26).

2. Charnière selon la revendication 1, caractérisée en ce que le rapport de diamètre entre la partie cylindrique lisse (36) et son premier filetage arrière (35) est de l'ordre de 0,75, et entre la partie cylindrique lisse (36) et son second filetage avant (39) est compris entre 1,25 et 1,50.

3. Charnière selon la revendication 1 ou 2, caractérisée en ce que le rapport de diamètre entre la tête de vis (32) et sa partie cylindrique lisse (36) est compris entre 1,2 et 2, de préférence de l'ordre de 1,6.

4. Charnière selon l'une des revendications précédentes, caractérisée en ce que la distance (d) entre la face inférieure d'appui (33) de la tête (32) et l'épaulement (37) séparant la partie cylindrique lisse (36) du second filetage avant (39) est usinée avec une tolérance inférieure à 0,05, voire 0,03 mm.

5. Charnière selon l'une des revendications précédentes, caractérisée en ce qu'une gorge (34,38) est ménagée entre la tête de vis (32) et le premier filetage (35) et/ou entre l'épaulement avant (37) et le second filetage (39).
